# EUROPÄISCHE PATENTSCHRIFT

(11) **EP 3 980 631 B1**
(45) Veröffentlichungstag und Bekanntmachung des Hinweises auf die Patenterteilung: **23.10.2024**
(21) Anmeldenummer: 20732511.9
(22) Anmeldetag: 03.06.2020
(51) Int. Cl.: F01N 11/00, F01N 3/10

(54) **VERFAHREN ZUM ERMITTELN DES STICKOXIDANTEILS UND/ODER AMMONIAKANTEILS IM ABGAS EINER BRENNKRAFTMASCHINE UND ABGASSTRANG**
METHOD FOR ASCERTAINING THE NITROGEN OXIDE FRACTION AND/OR AMMONIA FRACTION IN THE EXHAUST GAS OF AN INTERNAL COMBUSTION ENGINE, AND EXHAUST SECTION
PROCÉDÉ DE DÉTERMINATION DE LA PART D'AZOTE ET/OU DE LA PART D'AMMONIAC DANS LES GAZ D'ÉCHAPPEMENT D'UNE MACHINE À COMBUSTION INTERNE ET LIGNE DE GAZ D'ÉCHAPPEMENT

(30) Priorität: 06.06.2019 DE 102019208254
(43) Veröffentlichungstag der Anmeldung: 13.04.2022
(73) Patentinhaber: Vitesco Technologies GmbH, 93055 Regensburg (DE)
(72) Erfinder: RODATZ, Paul, 81737 München (DE); HAFT, Gerhard, 81737 München (DE); ACHLEITNER, Erwin, 81737 München (DE); KLEINER, Florian, 81737 München (DE)
(74) Vertreter: Vitesco Technologies
(86) Internationale Anmeldenummer: PCT/EP2020/065331
(87) Internationale Veröffentlichungsnummer: WO 2020/245186

(56) Entgegenhaltungen:
- DE-A1- 102009 000 148
- DE-A1- 102012 022 841
- DE-A1- 102012 220 722
- DE-A1- 102017 218 612
- US-A1- 2010 175 368

## Beschreibung

Die vorliegende Erfindung betrifft ein Verfahren zum Ermitteln des Stickoxidanteils und/oder Ammoniakanteils im Abgas einer Brennkraftmaschine und einen Abgasstrang, insbesondere ein Verfahren zum Auswerten der Signale eines in einem Abgasstrang einer Brennkraftmaschine stromabwärts eines Katalysators, vorzugsweise Drei-Wege-Katalysators, angeordneten Abgassensors im Hinblick auf den Stickoxidanteil und/oder Ammoniakanteil im Abgas der Brennkraftmaschine.

Katalysatoren werden für die Abgasnachbehandlung in Fahrzeugen verwendet, um Luftschadstoffe umzuwandeln und nicht in die Umgebung auszustoßen. Bei der Abgasnachbehandlung mittels einem Drei-Wege-Katalysators werden Kohlenstoffmonoxid (CO), Stickoxide (NOx) und unverbrannte Kohlenwasserstoffe (HC) zu Kohlenstoffdioxid (CO2), Stickstoff (N2) und Wasser (H2O) umgewandelt.

Die Steuerung bzw. Regelung des Luft-Kraftstoff-Gemischs für eine Brennkraftmaschine erfolgt mittels einer kaskadierten Regelung, die aus einer inneren Regelschleife, die den Lambdawert stromaufwärts eines Katalysators regelt, und einer äußeren Regelschleife besteht, die den Lambdawert stromabwärts des Katalysators regelt. Insbesondere soll dabei der Katalysator im optimalen Konvertierungsfenster gehalten werden. Dafür ist es wünschenswert, die Sauerstoffbeladung des Katalysators, insbesondere des Drei-Wege-Katalysators, derart zu steuern bzw. regeln, dass der Katalysator mit ungefähr 50 % Sauerstoff gesättigt bzw. beladen ist. Damit kann eine ausreichende Sicherheit gegen eventuelle Störungen des Systems in Richtung mager oder fett gewährleistet werden.

Beispielhafte Abgasanlagen und Verfahren zum Steuern von Abgasanlagen sind bekannt aus DE 10 2012 022 841 A1, DE 10 2009 000 148 A1 und D3: DE 10 2012 220 722 A1.

Der vorliegenden Erfindung liegt die Aufgabe zugrunde, ein Verfahren sowie einen Abgasstrang bereitzustellen, mit denen der Stickoxidanteil und/oder Ammoniakanteil im Abgas einer Brennkraftmaschine möglichst einfach und genau ermittelt werden kann.

Diese Aufgabe wird mit einem Verfahren gemäß Anspruch 1 und einem Abgasstrang gemäß Anspruch 10 gelöst. Bevorzugte Ausgestaltungen sind in den Unteransprüchen angegeben.

Der vorliegenden Erfindung liegt im Wesentlichen der Gedanke zu Grunde, dass in einem Katalysator, insbesondere Drei-Wege-Katalysator, bei Sauerstoffmangel im Abgas, d. h. bei fettem Abgas, Ammoniak produziert wird, jedoch die im Abgas befindlichen Stickoxide im Katalysator nahezu vollständig reduziert werden. Bei Sauerstoffüberschuss, d.h. bei magerem Abgas, hingegen kann der Katalysator die im Abgas befindlichen Stickoxide nur unvollständig reduzieren. Somit kann bei einem bekannten Lambdawert der Stickoxidanteil und/oder Ammoniakanteil im Abgas stromabwärts des Katalysators ermittelt werden. Darüber hinaus macht sich die vorliegende Erfindung zu Nutze, dass ein Abgassensor, wie beispielsweise ein Stickoxidsensor, aufgrund seiner (Quer)Empfindlichkeit auf Ammoniak die Summe aus Stickoxidanteil und Ammoniakanteil anzeigt und durch das Ermitteln des Betriebszustandes der Brennkraftmaschine die beiden Anteile ermittelt werden können. Ist nämlich der Betriebszustand der Brennkraftmaschine bekannt, d. h. ob die Brennkraftmaschine fett oder mager betrieben wird, kann aus dem Signal des Abgassensors der Ammoniakanteil und/oder Stickoxidanteil im Abgas ermittelt werden.

Folglich ist gemäß einem Aspekt der vorliegenden Erfindung ein Verfahren zum Ermitteln des Stickoxidanteils und/oder Ammoniakanteils im Abgas einer Brennkraftmaschine offenbart, die einen in einem Abgasstrang der Brennkraftmaschine angeordneten Katalysator, vorzugsweise Drei-Wege-Katalysator, und einen stromabwärts des Katalysators angeordneten Abgassensor aufweist. Das erfindungsgemäße Verfahren umfasst ein Erzeugen eines linearen und/oder binären Lambdasignals mittels des Abgassensors, das den Lambdawert anzeigt, ein Ermitteln eines Lambdawerts basierend auf dem erzeugten linearen und/oder binären Lambdasignal, ein Ermitteln eines Betriebszustands der Brennkraftmaschine, der einen mageren Betrieb oder einen fetten Betrieb anzeigen kann, basierend zumindest teilweise auf dem ermittelten Lambdawert, ein Erzeugen von zumindest einem Signal mittels des Abgassensors, das den Anteil an Stickoxid und/oder Ammoniak im Abgas anzeigt, und ein Ermitteln des Stickoxidanteils und/oder Ammoniakanteils im Abgas der Brennkraftmaschine zumindest teilweise basierend auf dem ermittelten Betriebszustand der Brennkraftmaschine und zumindest teilweise basierend auf dem zumindest einen Signal des Abgassensors.

Unter Kenntnis des Betriebszustands der Brennkraftmaschine kann, wie bereits oben erwähnt, aus dem Signal des Abgassensors der Stickoxidanteil und/oder Ammoniakanteil ermittelt werden. Liegt beispielsweise ein fetter Betrieb der Brennkraftmaschine vor, so werden nahezu sämtliche Stickoxide im Katalysator reduziert. Außerdem wird im Katalysator aufgrund des Sauerstoffmangels Ammoniak produziert und somit zeigt das Signal des Abgassensors nahezu vollständig den Ammoniakanteil im Abgas an. Außerdem kann das Signal des Abgassensors zum Unterscheiden zwischen Stickoxidanteil und Ammoniakanteil bei gleichzeitiger Berücksichtigung des Betriebszustandes der Brennkraftmaschine ausgewertet werden.

Insbesondere kann aus dem ermittelten Lambdawert festgestellt werden, ob es sich bei dem Betriebszustand der Brennkraftmaschine um einen fetten Betrieb oder mageren Betrieb handelt, wobei daraus wiederum abgeleitet werden kann, inwieweit Ammoniak im Katalysator, vorzugsweise Drei-Wege-Katalysator, produziert wird oder nicht.

Bevorzugt zeigt das zumindest eine erzeugte Signal des Abgassensors den Stickoxidanteil im Abgas an, wenn der ermittelte Lambdawert größer ist als ein Lambdaschwellenwert. Ferner zeigt das zumindest eine erzeugte Signal des Abgassensors den Ammoniakanteil im Abgas an, wenn der ermittelte Lambdawert kleiner ist als der Lambdaschwellenwert.

Dies basiert insbesondere darauf, dass beim Überschreiten des Lambdaschwellenwerts ein mageres Abgas, d. h. Sauerstoffüberschuss im Abgas, vorliegt und somit das Signal des Abgassensors den Stickoxidanteil im Abgas anzeigt. Im Gegensatz dazu liegt beim Unterschreiten des Lambdaschwellenwerts ein fettes Abgas, d. h. Sauerstoffmangel im Abgas, vor, weshalb das Signal des Abgassensors im Wesentlichen den Ammoniakanteil im Abgas anzeigt.

In einer bevorzugten Ausgestaltung des erfindungsgemäßen Verfahrens ist der Lambdaschwellenwert als festgelegter Wert vorgegeben, wie beispielsweise 1,0 oder 200 mV oder der Lambdaschwellenwert wird basierend auf der Temperatur des Abgases, der Temperatur des Katalysators, des Abgasmassenstroms, des Abgasvolumenstroms, der Abgasgeschwindigkeit und/oder des Katalysatoralterungszustands dynamisch ermittelt und somit in Abhängigkeit der Betriebsparameter der Brennkraftmaschine und/oder des Abgasstrangs variabel angepasst.

In einer weiteren bevorzugten Ausgestaltung umfasst das erfindungsgemäße Verfahren ferner ein Ermitteln des Abgasmassenstroms. Dabei basiert das Ermitteln des Stickoxidanteils und/oder Ammoniakanteils im Abgas der Brennkraftmaschine ferner zumindest teilweise auf einem Massenstromfaktor, wenn der ermittelte Abgasmassenstrom größer ist als ein vorbestimmter Abgasm assenstromschwel lenwert.

Insbesondere kann es trotz fetten Abgasbedingungen bei einem großen Abgasmassenstrom aufgrund der unzureichenden Verweilzeit des Abgases im Katalysator zu einer unvollständigen Konvertierung der Stickoxide kommen. In diesem Zustand können folglich sowohl Stickoxide als auch Ammoniak gleichzeitig im Abgas stromabwärts des Katalysators vorhanden sein. Deshalb ist bei dieser bevorzugten Ausgestaltung der Erfindung vorgesehen, dass beim Überschreiten des vorbestimmten Abgasmassenstromschwellenwerts ein Massenstromfaktor berücksichtigt wird, aus dem dann wiederum aus dem Signal des Abgassensors gleichzeitig der Ammoniakanteil und der Stickoxidanteil im Abgas bestimmt werden kann. Insbesondere ist der Massenstromfaktor dazu ausgebildet, das Signal des Abgassensors in ein den Stickoxidanteil anzeigendes Stickoxidsignal und ein den Ammoniakanteil anzeigendes Ammoniaksignal aufzuteilen.

Vorzugsweise wird der Massenstromfaktor basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt. Somit kann der Massenstromfaktor ein an die Betriebsparameter der Brennkraftmaschine und/oder des Abgasstrangs dynamisch angepasster Faktor sein.

In einer weiteren vorteilhaften Ausgestaltung weist das erfindungsgemäße Verfahren ferner ein Ermitteln einer Empfindlichkeit des Abgassensors auf Ammoniak auf, wobei beim Ermitteln des Ammoniakanteils im Abgas der Brennkraftmaschine die ermittelte Empfindlichkeit des Abgassensors auf Ammoniak berücksichtigt wird. Beispielsweise kann die Empfindlichkeit ein vorab festgelegter Wert sein oder kann während des Betriebs in Abhängigkeit des Alterungszustands des Abgassensors angepasst werden.

Vorzugsweise umfasst das erfindungsgemäße Verfahren ferner ein Ermitteln des Kohlenmonooxidanteils im Abgas der Brennkraftmaschine zumindest teilweise basierend auf dem ermittelten Ammoniakanteil im Abgas der Brennkraftmaschine und zumindest teilweise basierend auf einem Kohlenmonooxidkorrelationsfaktors und/oder ein Ermitteln des Kohlenwasserstoffanteils im Abgas der Brennkraftmaschine zumindest teilweise basierend auf dem ermittelten Ammoniakanteil im Abgas der Brennkraftmaschine und zumindest teilweise basierend auf einem Kohlenwasserstoffkorrelationsfaktor auf.

Dabei ist es bevorzugt, dass der Kohlenmonooxidkorrelationsfaktor und/oder der Kohlenwasserstoffkorrelationsfaktor basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt wird.

Insbesondere wird sich dabei zu Nutze gemacht, dass der Ammoniakanteil ein geeigneter Indikator für die Anteile an Kohlenmonooxid und Kohlenwasserstoff im Abgas stromabwärts des Katalysators, vorzugsweise Drei-Wege-Katalysators, sein kann. Durch Heranziehung des Kohlenmonooxidkorrelationsfaktors bzw. Kohlenwasserstoffkorrelationsfaktors kann basierend auf dem Ammoniakanteil der jeweilige Kohlenmonooxidanteil bzw. Kohlenwasserstoffanteil im Abgas ermittelt werden.

Gemäß eines weiteren Aspekts der vorliegenden Erfindung ist ein Abgasstrang für eine Brennkraftmaschine offenbart, der einen Katalysator zum Nachbehandeln des Abgases der Brennkraftmaschine, einen stromabwärts des Katalysators angeordneten Abgassensor, der dazu ausgebildet ist, ein Signal zu erzeugen, das den Anteil an Stickoxid und/oder Ammoniak im Abgas anzeigt, und eine Steuereinheit aufweist, die die Signale des Abgassensors empfängt und dazu ausgebildet ist, ein Verfahren nach einem der vorhergehenden Ansprüche auszuführen.

Weitere Aufgaben und Merkmale der vorliegenden Erfindung werden dem Fachmann durch Ausüben der vorliegenden Lehre und Betrachten der beiliegenden Zeichnungen ersichtlich, in denen:
- Fig. 1: einen Abgasstrang einer Brennkraftmaschine mit Katalysator und Abgassensor zeigt, und
- Fig. 2: ein Flussdiagramm einer beispielhaften Ausgestaltung eines erfindungsgemäßen Verfahrens zum Ermitteln des Stickoxidanteils und/oder Ammoniakanteils im Abgas des Abgasstrangs der Fig. 1 darstellt.

Im Rahmen der vorliegenden Offenbarung beschreibt der Begriff "mageres Abgas" ein Abgas mit Sauerstoffüberschuss, wohingegen der Begriff "fettes Abgas" ein Abgas mit Sauerstoffmangel und zum Teil einem Überschuss an unverbranntem Kraftstoff beschreibt.

Außerdem beschreibt im Rahmen der vorliegenden Offenbarung der Begriff "lineares Lambdasignal" den Verlauf der dimensionslosen Lambdawerte, die das Luft-Kraftstoff-Verhältnis der Verbrennung anzeigen. Im Gegensatz dazu beschreibt im Rahmen der vorliegenden Offenbarung der Begriff "binäres Lambdasignal" den Verlauf der Lambdawerte (mit der Einheit [mV]) als Signal des Abgassensors.

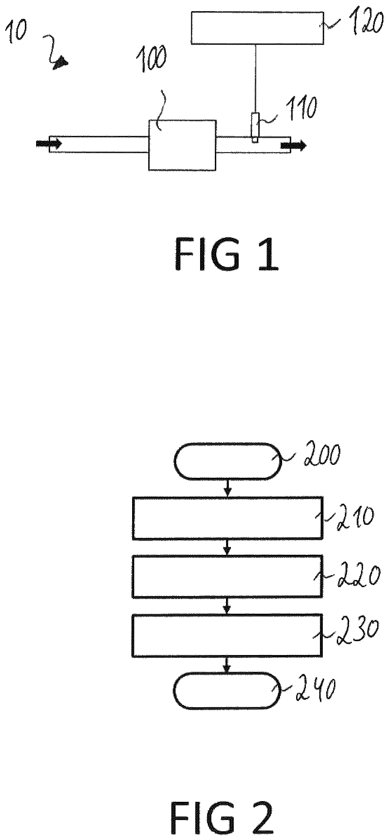

Die Fig. 1 stellt einen beispielhaften Katalysator 100 dar, der in einem Abgasstrang 10 einer Brennkraftmaschine (nicht gezeigt), vorzugsweise eines Ottomotors, eingesetzt werden kann, um Luftschadstoffe im Abgas umzuwandeln. Der Katalysator 100 ist vorzugsweise ein Drei-Wege-Katalysator zum Umwandeln von Kohlenstoffmonooxid (CO), Stickoxiden (NOx) und unverbrannten Kohlenwasserstoffen (HC) zu Kohlenstoffdioxid (CO2), Stickstoff (N2) und Wasser (H2O).

Für den Fachmann ist selbsterklärend, dass weitere Einheiten bzw. Vorrichtungen im Abgasstrang 10 vorhanden sein können, wie beispielsweise ein Partikelfilter oder ein Schalldämpfer.

Stromabwärts des Katalysators 100 ist ein Abgassensor 110 angeordnet, der dazu ausgebildet ist, den Anteil an Stickoxid und/oder Ammoniak im Abgas stromabwärts des Katalysators 100 zu ermitteln. Der auf Stickoxid und/oder Ammoniak empfindliche Abgassensor 110 ist beispielsweise ein Mischpotentialsensor mit einer Mischpotential- und/oder einer Referenzelektrode. Vorzugsweise ist der Abgassensor 110 ein Stickoxidsensor, der auf Ammoniak querempfindlich ist.

Der Brennkraftmaschine ist ferner eine Steuereinheit 120 zugeordnet, die mit dem Abgassensor 110 in Kommunikationsverbindung steht und dazu ausgebildet ist, die Signale desselben zu erfassen, auszuwerten und den Betrieb der Brennkraftmaschine zu steuern. So ist die Steuereinheit 120 dazu ausgebildet, das vom Abgassensor 110 gesendete Sensorsignal zu empfangen und daraus den Anteil an Stickoxid und/oder Ammoniak im Abgas stromabwärts des Katalysators 100 zu ermitteln, was im Folgenden mit Verweis auf die Fig. 2 noch genauer erläutert wird.

Unter Verweis auf die Fig. 2 ist ein beispielhaftes Ablaufdiagramm eines erfindungsgemäßen Verfahrens zum Ermitteln des Stickoxidanteils und/oder Ammoniakanteils im Abgas stromabwärts des Katalysators 100 der Fig. 1 gezeigt.

Das Verfahren der Fig. 2 startet beim Schritt 200 und gelangt dann zum Schritt 210, an dem ein Betriebszustand der Brennkraftmaschine ermittelt wird. Insbesondere zeigt dieser Betriebszustand der Brennkraftmaschine einen mageren Betrieb oder einen fetten Betrieb der Brennkraftmaschine an. Ein fetter Betrieb der Brennkraftmaschine ist dadurch gekennzeichnet, dass gegenüber einem stöchiometrischen Verhältnis von Sauerstoff zu Kraftstoff, bei dem sämtlicher Kraftstoff und Sauerstoff verbrannt wird, ein Kraftstoffüberschuss und somit das Abgas mit einem Überschuss an unverbranntem Kraftstoff und einem Mangel an Sauerstoff vorliegt. Somit handelt es sich um fettes Abgas. Im Gegensatz dazu beschreibt ein magerer Betrieb der Brennkraftmaschine einen Betrieb mit einem Sauerstoffüberschuss relativ zum Kraftstoff. Dies führt zu einem Sauerstoffüberschuss im Abgas, weshalb es sich um mageres Abgas handelt.

Insbesondere kann zum Ermitteln des Betriebszustands der Brennkraftmaschine beim Schritt 210 ein Lambdawert mittels des Abgassensors 110 ermittelt werden. Der Abgassensor kann, neben dem Erzeugen eines den Stickoxidanteil und/oder Ammoniakanteil anzeigenden Hauptsignals, ferner ein lineares und/oder binäres Lambdasignal erzeugen, aus dem wiederum der Lambdawert ermittelt werden kann, der für den Betriebszustand der Brennkraftmaschine charakterisierend ist.

In einem weiteren Schritt 220 wird mittels des Abgassensors 110 zumindest ein (Haupt)Signal erzeugt, das die Summe der Anteile an Stickoxid und Ammoniak im Abgas der Brennkraftmaschine stromabwärts des Katalysators 100 anzeigt.

In einem darauffolgenden Schritt 230 wird zumindest teilweise basierend auf dem ermittelten Betriebszustand der Brennkraftmaschine und zumindest teilweise basierend auf dem zumindest einen (Haupt)Signal des Abgassensors 110 der Stickoxidanteil und/oder Ammoniakanteil im Abgas der Brennkraftmaschine ermittelt.

Beim Schritt 230 kann es insbesondere bevorzugt sein, dass das zumindest eine erzeugte Signal des Abgassensors 110 den Stickoxidanteil im Abgas anzeigt, wenn der ermittelte Lambdawert größer ist als ein Lambdaschwellenwert. Alternativ zeigt das zumindest eine erzeugte Signal des Abgassensors 110 den Ammoniakanteil im Abgas an, wenn der ermittelte Lambdawert kleiner ist als der Lambdaschwellenwert. Dies ist insbesondere dann bevorzugt, wenn der ermittelte Lambdawert basierend auf dem binären Lambdasignal des Abgassensors 110 ermittelt wird.

Dabei wird sich insbesondere zu Nutze gemacht, dass bei einem fetten Abgas der Drei-Wege-Katalysator 100 Ammoniak produziert und die Stickoxide im Drei-Wege-Katalysator 100 nahezu vollständig reduziert werden. Das heißt, dass in diesem Betriebszustand der Brennkraftmaschine, bei dem fettes Abgas vorliegt, nahezu lediglich Ammoniak stromabwärts des Katalysators 100 vorhanden ist, jedoch kein Stickoxid. Aus diesem Grund kann dann das Signal des Abgassensors 110 als vollständig den Ammoniakanteil anzeigend interpretiert werden, wobei der Stickoxidanteil bei Null liegt.

Der Lambdaschwellenwert kann ein festgelegter Wert sein, wie beispielsweise 200 mV. Alternativ kann der Lambdaschwellenwert dynamisch während des Betriebs in Abhängigkeit der Betriebsparameter der Brennkraftmaschine und/oder des Abgasstrangs 10 eingestellt werden. Beispielsweise kann der Lambdaschwellenwert basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt und dynamisch angepasst werden.

Beim Schritt 230 kann es zudem vorteilhaft sein, den Abgasmassenstrom zu ermitteln. Beispielsweise kann der Abgasmassenstrom aus den Signalen eines im Einlasstrakt der Brennkraftmaschine angeordneten Drucksensors oder Massenstromsensors abgeleitet und/oder über die Betriebsparameter der Brennkraftmaschine ermittelt werden.

Das Ermitteln des Stickoxidanteils und/oder Ammoniakanteils im Abgas der Brennkraftmaschine basiert dann ferner zumindest teilweise auf einem Massenstromfaktor, wenn der ermittelte Abgasmassenstrom größer ist als ein vorbestimmter Abgasmassenstromschwellenwert. Insbesondere kann es bei großen Abgasmassenstromwerten trotz einem fetten Abgas aufgrund der unzureichenden Verweilzeit im Katalysator 100 zu einer unvollständigen Konvertierung von Stickoxiden kommen, so dass in diesem Zustand sowohl Stickoxide als auch Ammoniak gleichzeitig stromabwärts des Katalysators 100 vorhanden sein können. Aus diesem Grund ist es bevorzugt, einen Massenstromfaktor beim Ermitteln des Stickoxidanteils und/oder Ammoniakanteils zu berücksichtigen, wenn der ermittelte Abgasmassenstrom größer ist als der vorbestimmte Abgasmassenstromschwellenwert. Der Massenstromfaktor ist dabei insbesondere dazu ausgebildet, das Signal des Abgassensors 110 in ein den Stickoxidanteil anzeigendes Stickoxidsignal und ein den Ammoniakanteil anzeigendes Ammoniaksignal aufzuteilen, wobei aus dem Stickoxidanteilsignal der Stickoxidanteil und aus dem Ammoniakanteilsignal der Ammoniakanteil im Abgas der Brennkraftmaschine ermittelt werden kann.

Auch der Massenstromfaktor kann ein vorbestimmter Faktor sein oder kann dynamisch in Abhängigkeit der Betriebsparameter der Brennkraftmaschine und/oder des Abgasstrangs eingestellt werden. Als Betriebsparameter können dabei die Temperatur des Abgases, die Temperatur des Katalysators, der Abgasmassenstrom, der Abgasvolumenstrom, die Abgasgeschwindigkeit und/oder der Katalysatoralterungszustand angeführt werden.

Beim Schritt 230 kann es außerdem bevorzugt sein, beim Ermitteln es Ammoniakanteils im Abgas der Brennkraftmaschine außerdem eine (Quer)Empfindlichkeit des Abgassensors auf Ammoniak zu berücksichtigen. Insbesondere kann das Hauptsignal des Abgassensors 110 die Summe der Anteile an Stickoxid und Ammoniak anzeigen, wobei beim Ammoniakanteil ein Empfindlichkeitsfaktor hinterlegt ist. Dieser Empfindlichkeitsfaktor kann in Abhängigkeit der Alterung des Abgassensors 110 angepasst werden. Alternativ kann der Empfindlichkeitsfaktor von Werk als ein vorbestimmter Wert festgelegt sein. Folglich kann es bevorzugt sein, beim Schritt 230 ferner die aktuelle Querempfindlichkeit des Abgassensors 100 zu ermitteln bzw. heranzuziehen und beim Ermitteln des Ammoniakanteils im Abgas der Brennkraftmaschine zu berücksichtigen.

Auch der Empfindlichkeitsfaktor kann ein vorbestimmter Faktor sein oder kann dynamisch in Abhängigkeit der Betriebsparameter der Brennkraftmaschine und/oder des Abgasstrangs eingestellt werden. Als Betriebsparameter können dabei die Temperatur des Abgases, die Temperatur des Katalysators, der Abgasmassenstrom, der Abgasvolumenstrom, die Abgasgeschwindigkeit und/oder der Katalysatoralterungszustand angeführt werden.

Darüber hinaus macht sich die vorliegende Erfindung zu Nutze, dass der Ammoniakanteil ein geeigneter Indikator für den Anteil an Kohlenmonooxid und Kohlenwasserstoff im Abgas der Brennkraftmaschine stromabwärts des Katalysators 100 sein kann. Insbesondere kann aus dem ermittelten Ammoniakanteil im Abgas der Brennkraftmaschine der Kohlenmondoxidanteil im Abgas der Brennkraftmaschine zumindest teilweise basierend auf einem Kohlenmonooxidkorrelationsfaktor ermittelt werden. Alternativ oder zusätzlich kann aus dem ermittelten Ammoniakanteil im Abgas der Brennkraftmaschine auch der Kohlenwasserstoffanteil im Abgas der Brennkraftmaschine zumindest teilweise basierend auf einem Kohlenwasserstoffkorrelationsfaktor ermittelt werden.

Somit kann mittels eines Abgassensors 100 sowohl der Stickoxidanteil, der Ammoniakanteil, der Kohlenmonooxidanteil als auch der Kohlenwasserstoffanteil im Abgas der Brennkraftmaschine stromabwärts des Katalysators 100 ermittelt werden.

## Patentansprüche

1. Verfahren zum Ermitteln des Stickoxidanteils und/oder Ammoniakanteils im Abgas einer Brennkraftmaschine, die einen in einem Abgasstrang (10) der Brennkraftmaschine angeordneten Katalysator (100), vorzugsweise Drei-Wege-Katalysator, und einen stromabwärts des Katalysators (100) angeordneten Abgassensor (110) umfasst, wobei das Verfahren aufweist:
- Erzeugen eines linearen und/oder binären Lambdasignals mittels des Abgassensors (110), das den Lambdawert anzeigt,
- Ermitteln eines Lambdawerts basierend auf dem erzeugten linearen und/oder binären Lambdasignal,
- Ermitteln eines Betriebszustandes der Brennkraftmaschine, der einen mageren Betrieb oder einen fetten Betrieb der Brennkraftmaschine anzeigt, basierend zumindest teilweise auf dem ermittelten Lambdawert,
- Erzeugen von zumindest einem Signal mittels des Abgassensors (110), das den Anteil an Stickoxid und/oder Ammoniak im Abgas anzeigt, und
- Ermitteln des Stickoxidanteils und/oder Ammoniakanteils im Abgas der Brennkraftmaschine zumindest teilweise basierend auf dem ermittelten Betriebszustand der Brennkraftmaschine und zumindest teilweise basierend auf dem zumindest einen Signal des Abgassensors (110).

2. Verfahren nach Anspruch 1, wobei
das zumindest eine erzeugte Signal des Abgassensors (110) den Stickoxidanteil im Abgas anzeigt, wenn der ermittelte Lambdawert größer ist als ein Lambdaschwellenwert, und/oder
das zumindest eine erzeugte Signal des Abgassensors (110) den Ammoniakanteil im Abgas anzeigt, wenn der ermittelte Lambdawert kleiner ist als der Lambdaschwellenwert.

3. Verfahren nach Anspruch 2, wobei
der Lambdaschwellenwert basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt wird, oder
der Lambdaschwellenwert als festgelegter Wert vorbestimmt ist.

4. Verfahren nach einem der vorhergehenden Ansprüche, ferner mit:
- Ermitteln des Abgasmassenstroms,
wobei das Ermitteln des Stickoxidanteils und/oder Ammoniakanteils im Abgas der Brennkraftmaschine ferner zumindest teilweise auf einem Massenstromfaktor basiert, wenn der ermittelte Abgasmassenstrom größer ist als ein vorbestimmter Abgasmassenstromschwellenwert.

5. Verfahren nach Anspruch 4, wobei der Massenstromfaktor basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt wird.

6. Verfahren nach einem der vorhergehenden Ansprüche, ferner mit:
- Ermitteln einer Empfindlichkeit des Abgassensors auf Ammoniak,
wobei beim Ermitteln des Ammoniakanteils im Abgas der Brennkraftmaschine die ermittelte Empfindlichkeit des Abgassensors (110) auf Ammoniak berücksichtigt wird.

7. Verfahren nach einem der vorhergehenden Ansprüche, ferner mit:
- Ermitteln des Kohlenmonooxidanteils im Abgas der Brennkraftmaschine zumindest teilweise basierend auf dem ermittelten Ammoniakanteil im Abgas der Brennkraftmaschine und zumindest teilweise basierend auf einem Kohlenmonooxidkorrelationsfaktor, und/oder
- Ermitteln des Kohlenwasserstoffanteils im Abgas der Brennkraftmaschine zumindest teilweise basierend auf dem ermittelten Ammoniakanteil im Abgas der Brennkraftmaschine und zumindest teilweise basierend auf einem Kohlenwasserstoffkorrelationsfaktor.

8. Verfahren nach Anspruch 7, wobei der Kohlenmonooxidkorrelationsfaktor und/oder der Kohlenwasserstoffkorrelationsfaktor basierend auf der Temperatur des Abgases, der Temperatur des Katalysators, des Abgasmassenstroms, des Abgasvolumenstroms, der Abgasgeschwindigkeit und/oder des Katalysatoralterungszustands ermittelt wird.

9. Abgasstrang (10) für eine Brennkraftmaschine, mit:
- einem Katalysator (100) zum Nachbehandeln des Abgases der Brennkraftmaschine,
- einen stromabwärts des Katalysators (100) angeordneten Abgassensor (110), der dazu ausgebildet ist, ein Signal zu erzeugen, das den Anteil an Stickoxid und/oder Ammoniak im Abgas anzeigt, und
- eine Steuereinheit (120), die die Signale des Abgassensors (110) empfängt und dazu ausgebildet ist, ein Verfahren nach einem der vorhergehenden Ansprüche auszuführen.

## Claims

1. Method for determining the nitrogen oxide content and/or ammonia content in the exhaust gas of an internal combustion engine which comprises a catalytic converter (100), preferably three-way catalytic converter, arranged in an exhaust tract (10) of the internal combustion engine and an exhaust gas sensor (110) arranged downstream of the catalytic converter (100), wherein the method comprises:
- generating a linear and/or binary lambda signal which indicates the lambda value by means of the exhaust gas sensor (110),
- determining a lambda value based on the generated linear and/or binary lambda signal,
- determining an operating state of the internal combustion engine which indicates a lean operation or a rich operation of the internal combustion engine based at least partially on the determined lambda value,
- generating at least one signal by means of the exhaust gas sensor (110) that indicates the proportion of nitrogen oxide and/or ammonia in the exhaust gas, and
- determining the nitrogen oxide content and/or ammonia content in the exhaust gas of the internal combustion engine at least partially based on the determined operating state of the internal combustion engine and at least partially based on the at least one signal of the exhaust gas sensor (110).

2. Method according to Claim 1, wherein
the at least one generated signal of the exhaust gas sensor (110) indicates the nitrogen oxide content in the exhaust gas when the determined lambda value is greater than a lambda threshold value, and/or
the at least one generated signal of the exhaust gas sensor (110) indicates the ammonia content in the exhaust gas when the determined lambda value is smaller than the lambda threshold value.

3. Method according to Claim 2, wherein
the lambda threshold value is determined based on the temperature of the exhaust gas, the temperature of the catalytic converter, the exhaust gas mass flow, the exhaust gas volume flow, the exhaust gas flow rate and/or the catalytic converter aging condition, or
the lambda threshold value is predetermined as a specified value.

4. Method according to any of the preceding claims, further comprising:
- determining the exhaust gas mass flow,
wherein the determining of the nitrogen oxide content and/or ammonia content in the exhaust gas of the internal combustion engine is further based at least partially on a mass flow factor when the determined exhaust gas mass flow is greater than a predetermined exhaust gas mass flow threshold value.

5. Method according to Claim 4, wherein the mass flow factor is determined based on the temperature of the exhaust gas, the temperature of the catalytic converter, the exhaust gas mass flow, the exhaust gas volume flow, the exhaust gas flow rate and/or the catalytic converter aging condition.

6. Method according to any of the preceding claims, further comprising:
- determining a sensitivity of the exhaust gas sensor for ammonia,
wherein when determining the ammonia content in the exhaust gas of the internal combustion engine the determined sensitivity of the exhaust gas sensor (110) for ammonia is considered.

7. Method according to any of the preceding claims, further comprising:
- determining the carbon monoxide content in the exhaust gas of the internal combustion engine at least partially based on the determined ammonia content in the exhaust gas of the internal combustion engine and at least partially based on a carbon monoxide correlation factor, and/or
- determining the hydrocarbon content in the exhaust gas of the internal combustion engine at least partially based on the determined ammonia content in the exhaust gas of the internal combustion engine and at least partially based on a hydrocarbon correlation factor.

8. Method according to Claim 7, wherein the carbon monoxide correlation factor and/or the hydrocarbon correlation factor is determined based on the temperature of the exhaust gas, the temperature of the catalytic converter, the exhaust gas mass flow, the exhaust gas volume flow, the exhaust gas flow rate and/or the catalytic converter aging condition.

9. Exhaust tract (10) for an internal combustion engine, comprising:
- a catalytic converter (100) for aftertreatment of the exhaust gas of the internal combustion engine,
- an exhaust gas sensor (110) which is arranged downstream of the catalytic converter (100) and configured for generating a signal indicating the content of nitrogen oxide and/or ammonia in the exhaust gas, and
- a control unit (120) which receives the signals of the exhaust gas sensor (110) and is configured to execute a method according to any of the preceding claims.

## Revendications

1. Procédé de détermination de la proportion d'oxyde d'azote et/ou de la proportion d'ammoniac dans le gaz d'échappement d'un moteur à combustion interne, qui comprend un catalyseur (100), de préférence un catalyseur à trois voies, agencé dans une ligne d'échappement (10) d'un moteur à combustion interne et un capteur de gaz d'échappement (110) agencé en aval du catalyseur (100), le procédé présentant :
- la génération d'un signal lambda linéaire et/ou binaire, qui indique la valeur lambda, au moyen du capteur de gaz d'échappement (110),
- la détermination d'une valeur lambda sur la base du signal lambda linéaire et/ou binaire généré,
- la détermination d'un état de fonctionnement du moteur à combustion interne, qui montre un fonctionnement maigre ou un fonctionnement gras du moteur à combustion interne au moins partiellement sur la base de la valeur lambda déterminée,
- la génération d'au moins un signal, qui indique la proportion d'oxyde d'azote et/ou d'ammoniac dans le gaz d'échappement, au moyen du capteur de gaz d'échappement (110) et
- la détermination de la proportion d'oxyde d'azote et/ou de la proportion d'ammoniac dans le gaz d'échappement du moteur à combustion interne au moins partiellement sur la base de l'état de fonctionnement déterminé du moteur à combustion interne et au moins partiellement sur la base dudit au moins un signal du capteur de gaz d'échappement (110).

2. Procédé selon la revendication 1, dans lequel ledit au moins un signal généré du capteur de gaz d'échappement (110) indique la proportion d'oxyde d'azote dans le gaz d'échappement lorsque la valeur lambda déterminée est supérieure à une valeur lambda seuil et/ou ledit au moins un signal généré du capteur de gaz d'échappement (110) indique la proportion d'ammoniac dans le gaz d'échappement lorsque la valeur lambda déterminée est inférieure à la valeur lambda seuil.

3. Procédé selon la revendication 2, dans lequel
la valeur lambda seuil est déterminée sur la base de la température du gaz d'échappement, de la température du catalyseur, du flux massique du gaz d'échappement, du flux volumique du gaz d'échappement, de la vitesse du gaz d'échappement et/ou de l'état de vieillissement du catalyseur ou
la valeur lambda seuil est prédéfinie en tant que valeur fixée.

4. Procédé selon l'une des revendications précédentes, comprenant en outre :
- la détermination du flux massique du gaz d'échappement,
la détermination de la proportion d'oxyde d'azote et/ou de la proportion d'ammoniac dans le gaz d'échappement du moteur à combustion interne étant en outre au moins partiellement basée sur un facteur de flux massique, le flux de gaz d'échappement déterminé étant supérieur à une valeur seuil prédéfinie du flux massique du gaz d'échappement.

5. Procédé selon la revendication 4, dans lequel le facteur de flux massique est déterminé sur la base de la température du gaz d'échappement, de la température du catalyseur, du flux massique du gaz d'échappement, du flux volumique du gaz d'échappement, de la vitesse du gaz d'échappement et/ou de l'état de vieillissement du catalyseur.

6. Procédé selon l'une des revendications précédentes, comprenant en outre :
- la détermination d'une sensibilité à l'ammoniac du capteur de gaz d'échappement,
la sensibilité à l'ammoniac déterminée du capteur de gaz d'échappement(110) étant prise en compte lors de la détermination de la proportion d'ammoniac dans le gaz d'échappement du moteur à combustion interne.

7. Procédé selon l'une des revendications précédentes, comprenant en outre :
- la détermination de la proportion de monoxyde de carbone dans le gaz d'échappement du moteur à combustion interne au moins partiellement sur la base de la proportion d'ammoniac déterminée dans le gaz d'échappement du moteur à combustion interne et au moins partiellement sur la base d'un facteur de corrélation du monoxyde de carbone et/ou
- la détermination de la proportion d'hydrocarbures dans le gaz d'échappement du moteur à combustion interne au moins partiellement sur la base de la proportion d'ammoniac déterminée dans le gaz d'échappement du moteur à combustion interne et au moins partiellement sur la base d'un facteur de corrélation des hydrocarbures de carbone.

8. Procédé selon la revendication 7, dans lequel le facteur de corrélation de monoxyde de carbone et/ou le facteur de corrélation des hydrocarbures est/sont déterminé(s) sur la base de la température du gaz d'échappement, de la température du catalyseur, du flux massique du gaz d'échappement, du flux volumique du gaz d'échappement, de la vitesse du gaz d'échappement et/ou de l'état de vieillissement du catalyseur.

9. Ligne de gaz d'échappement (10) pour un moteur à combustion interne, présentant :
- un catalyseur (100) destiné au post-traitement du gaz d'échappement du moteur à combustion interne,
- un capteur de gaz d'échappement (110) agencé en aval du catalyseur (100) qui est conçu pour générer un signal qui indique la proportion d'oxyde d'azote et/ou d'ammoniac dans le gaz d'échappement et
- une unité de commande (120), qui reçoit les signaux du capteur de gaz d'échappement (110) et qui est conçu pour exécuter un procédé selon l'une des revendications précédentes.
